(19) **Europäisches Patentamt**

**European Patent Office**

**Office européen des brevets**

(11) Veröffentlichungsnummer: **0 085 161**
**B1**

# (12) EUROPÄISCHE PATENTSCHRIFT

(45) Veröffentlichungstag der Patentschrift:
**22.06.88**

(21) Anmeldenummer: **82111497.2**

(22) Anmeldetag: **11.12.82**

(51) Int. Cl.⁴: **G 01 D 5/244**

(54) **Digitale elektrische Längen- oder Winkelmesseinrichtung.**

(30) Priorität: **26.01.82 DE 3202339**

(43) Veröffentlichungstag der Anmeldung:
**10.08.83 Patentblatt 83/32**

(45) Bekanntmachung des Hinweises auf die Patenterteilung:
**22.06.88 Patentblatt 88/25**

(84) Benannte Vertragsstaaten:
**AT CH FR GB IT LI NL SE**

(56) Entgegenhaltungen:
**EP - A - 0 042 917**
**DE - A - 2 729 697**
**US - A - 3 594 783**

(73) Patentinhaber: **Dr. Johannes Heidenhain GmbH,**
**Nansenstrasse 17, D-8225 Traunreut (DE)**

(72) Erfinder: **Schmitt, Walter, Ing.-grad.,**
**Hochgernstrasse 22, D-8225 Traunreut (DE)**

EP 0 085 161 B1

ACTORUM AG

## Beschreibung

Die Erfindung bezieht sich auf eine digitale elektrische Längen- oder Winkelmesseinrichtung mit einem analoge periodische Abtastsignale liefernden Messwertgeber und einer Einrichtung zur Fehlerkorrektur gemäss dem Oberbegriff des Anspruchs 1.

Eine derartige Einrichtung ist aus der US-A-3 594 783 bekannt.

Das Auflösungsvermögen derartiger Messsysteme ist durch die Gitterkonstante der benutzten Teilung bestimmt. Es wurden bereits Anstrengungen unternommen, bei inkrementalen Messsystemen insbesondere durch elektronische Massnahmen kleinere Digitalschritte zu erreichen. Dazu ist es günstig, wenn die analogen Signale vor der Unterteilung möglichst fehlerfrei sind.

Aus der DE-A-2 729 697 ist der Vorschlag bekannt, mit Hilfe eines Mikrocomputers die vorher digitalisierten Analogsignale zu korrigieren und dann aus den korrigierten Werten Interpolationswerte zu errechnen. Die Rechenzeit des Mikrocomputers bestimmt hier die maximale Bewegungsgeschwindigkeit beim Messen.

Der Erfindung liegt die Aufgabe zugrunde, eine Messeinrichtung der eingangs genannten Art mit einer Einrichtung zum Korrigieren von analogen periodischen Signalen zu schaffen, die relativ einfach angebaut ist, hohe Messgeschwindigkeiten zulässt, und eine ständige, selbsttätige Korrektur zulässt.

Diese Aufgabe wird durch die im Kennzeichen des Anspruches 1 angegebenen Merkmale gelöst.

Weitere – die Erfindung ausgestaltende – Merkmale sind in den Ansprüchen 2 bis 7 angegeben.

Die Vorteile der Erfindung liegen in dem erheblich reduzierten Aufwand im Analogteil der Signalauswerteeinrichtung, in der erhöhten Eigensicherheit hinsichtlich der Auswertung der Signale bei bestimmter Frequenz und in der Möglichkeit der schrittweisen Korrektur durch Annäherung der fehlerhaften Referenzsignale an die Abtastsignale.

Mit Hilfe der Zeichnungen soll anhand eines Ausführungsbeispieles die Erfindung noch näher erläutert werden.

Es zeigt

Fig. 1 eine vereinfachte Darstellung einer Längenmesseinrichtung mit einer Einrichtung zur Fehlerkorrektur,

Fig. 2 ein detailliertes Blockschaltbild der Einrichtung zur Fehlerkorrektur.

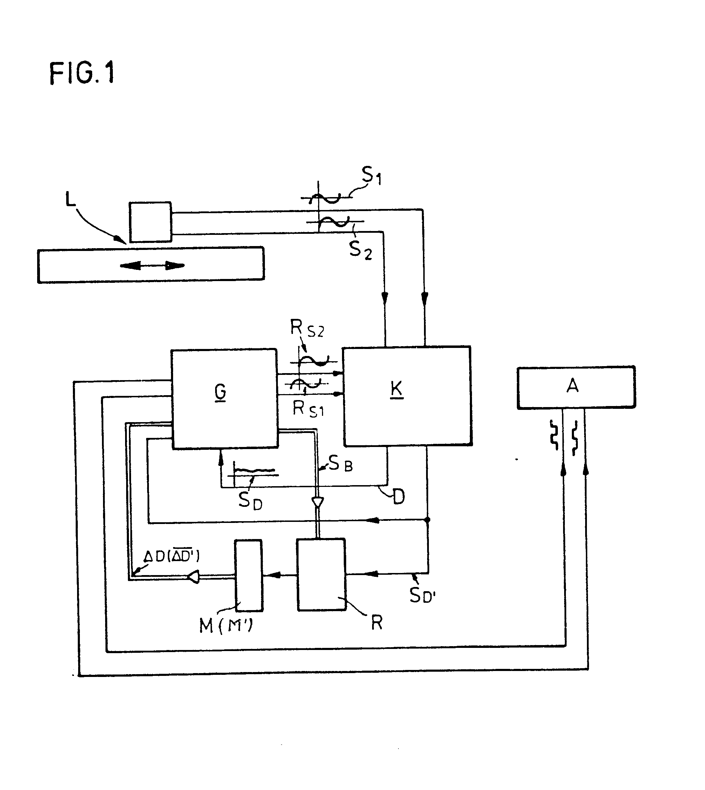

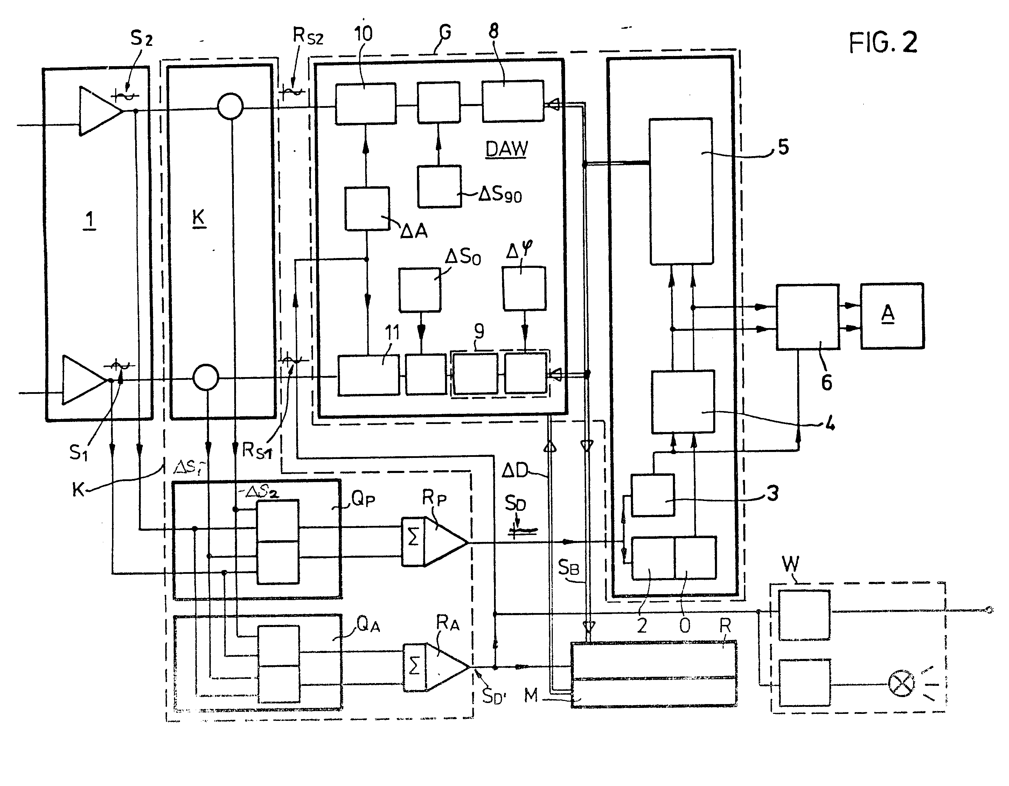

Ein in Fig. 1 gezeigtes inkrementales Längenmessgerät L liefert in Abhängigkeit von der Messbewegung Abtastsignale $S_1$ und $S_2$, die in einen Komparator K eingespeist werden. Der Komparator K ist mit einem Signalgenerator G verbunden, der Referenzsignale $R_{S1}$ und $R_{S2}$ erzeugt und in den Komparator K einspeist. Die analogen Referenzsignale $R_{S1}$ und $R_{S2}$ werden digital erzeugt, wie nachstehend anhand der Fig. 2 beschrieben wird. Abhängig vom Ergebnis des Vergleiches, den der Komparator K zwischen den Abtastsignalen $S_1$ bzw. $S_2$ und den Referenzsignalen $R_{S1}$ bzw.

$R_{S2}$ vornimmt, steuert ein analoges Steuersignal $S_D$ über eine Steuerleitung D einen Oszillator an, dessen Impulse in Abhängigkeit vom Steuersignal $S_D$ den Signalgenerator G speisen. Die Impulse werden ausserdem in einen inkrementalen Zähler mit numerischer Anzeige A eingespeist. Ferner wird aus dem Komparator K ein zweites vergleichsabhängiges Signal $S_D'$ in einen Korrekturbaustein R eingespeist, der auch mit binären Informationen $S_B$ aus dem Signalgenerator G beaufschlagt wird. Im Korrekturbaustein R werden aus den eingespeisten Informationen Korrekturdaten $\Delta D$ für Symmetrie, Amplitudenverhältnis, Phasenwinkel und Signalform der Referenzsignale $R_{S1}$ und $R_{S2}$ ermittelt, die über einen Datenspeicher M dem Signalgenerator G zugeführt werden, der anhand dieser Korrekturdaten $\Delta D$ neue, verbesserte Referenzsignale $R_{S1}$, $R_{S2}$ erzeugt.

Im nächsten Zyklus liegen nun die verbesserten Referenzsignale $R_{S1}$, $R_{S2}$ am Komparator K zum Vergleich an, so dass dieser ein verbessertes vergleichsabhängiges Signal $S_D'$ an den Korrekturbaustein R liefert, so dass veränderte Korrekturdaten $\Delta D$ in den Signalgenerator G eingespeist werden.

Auf diese Weise lassen sich schrittweise die Referenzsignale $R_{S1}$ und $R_{S2}$ an die Abtastsignale $S_1$, $S_2$ anpassen.

In der Fig. 2 ist eine detaillierte Einrichtung zur Fehlerkorrektur von analogen Signalen in Form eines Blockschaltbildes dargestellt. Die in bekannter Weise zur Richtungserkennung um 90° phasenversetzten Abtastsignale $S_1$ und $S_2$ werden in einem Abtastsignalverstärker 1 verstärkt. Die verstärkten analogen Abtastsignale $S_1$ und $S_2$ werden in einen Komparator K eingespeist, in welchem sie mit analogen Referenzsignalen $R_{S1}$ und $R_{S2}$ hinsichtlich der momentanen Phasenlage und der Amplitudenwerte verglichen werden.

Die verstärkten Abtastsignale $S_1$ und $S_2$ werden ausserdem in elektronische Bausteine $Q_P$ und $Q_A$ eingespeist. In diese elektronischen Bausteine $Q_P$ und $Q_A$ werden zudem noch Signale $\Delta S_1$ und $\Delta S_2$ eingespeist, die vom Komparator K als Ergebnis des Vergleiches von Abtastsignalen $S_1$ bzw. $S_2$ mit Referenzsignalen $R_{S1}$ bzw. $R_{S2}$ erzeugt werden. In den elektronischen Bausteinen $Q_P$ und $Q_A$ wird anhand der eingespeisten Signale $S_1$, $S_2$, $\Delta S_1$ und $\Delta S_2$ eine Quadrantenbewertung der Signale vorgenommen, d.h. es wird ermittelt, in welchem Quadranten die ermittelte Differenz zwischen den Abtastsignalen $S_1$ bzw. $S_2$ und den Referenzsignalen $R_{S1}$ bzw. $R_{S2}$ auftritt, und mit welchem Vorzeichen der jeweilige Differenzbetrag beaufschlagt werden muss. Die quadrantenbewerteten Signale werden jeweils einem Regelverstärker für die Phase $R_P$ und die Amplitude $R_A$ zugeführt, die die Steuersignale $S_D$ für die Phase und $S_D'$ für die Amplitude erzeugen.

Das dem Signalgenerator G zugeführte Steuersignal $S_D$ für die Phase wird im Signalgenerator G von Bausteinen 2 und 3 auf Informationen wie Betrag und Richtung untersucht. Der Betrag wird in Form einer Spannung an den Oszillator O angelegt, die Richtungsinformationen in einen Richtungsdiskriminator 4 eingespeist. Der Oszillator O erzeugt in Abhängigkeit von dem angelegten Steuersignal $S_D$ digitale Impulse, die ebenfalls dem Richtungsdiskriminator 4 zugeführt werden. Die am Ausgang des Richtungsdiskriminators 4 anliegenden Impulse beaufschlagen den Vorwärts- bzw. den Rückwärtseingang eines Zählers 5 und durchlaufen eine sogenannte Stillstandslogik 6, die ausserdem die Richtungsinformation von dem Baustein 3 erhält. Die die Stillstandslogik 6 durchlaufenden Impulse werden in einem inkrementalen Zähler mit numerischer Anzeige A gezählt und als gemessene Strecke angezeigt.

Der Bezug zur gemessenen Strecke – die der Verfahrbewegung der relativ zueinander beweglichen Bauteile der Längenmesseinrichtung L entspricht – wird durch den ständigen Vergleich der Abtastsignale $S_1$, $S_2$ mit den Referenzsignalen $R_{S1}$ und $R_{S2}$ gewonnen.

Der von den digitalen Impulsen des Oszillators O beaufschlagte Zähler 5 zählt diese Impulse. Davon ausgehend, dass eine Periode der analogen Abtastsignale $S_1$ bzw. $S_2$ 100-fach unterteilt werden soll, wird als Unterteilungsfaktor N = 100 festgelegt.

Der Signalgenerator G für die Referenzsignale $R_{S1}$ und $R_{S2}$ ist so ausgelegt, dass an seinen Ausgängen – die mit den Eingängen des Komparators K verbunden sind – immer dann ein Referenzsignal $R_{S1}$ und $R_{S2}$ mit einer vollständigen Periode anliegt, wenn der Zähler 5 einhundert vom Oszillator O erzeugte Impulse gezählt hat. Um dies zu gewährleisten, ist im Signalgenerator G ein Digital/Analogwandler DAW vorgesehen, der so aufgebaut ist, dass an seinem Ausgang ein analoges Signal ansteht, und zwar in Abhängigkeit von den binären Informationen, die an seinen Eingang angelegt werden.

Die Anzahl der erzeugten Impulse ist aber abhängig von dem Steuersignal $S_D$, das aus dem Vergleich der Abtastsignale $S_1$, $S_2$ mit den Referenzsignalen $R_{S1}$, $R_{S2}$ hervorgeht. Das Referenzsignal $R_{S1}$ bzw. $R_{S2}$ ist somit abhängig vom Ergebnis des Vergleiches zwischen den Abtastsignalen $S_1$, $S_2$ und den Referenzsignalen $R_{S1}$, $R_{S2}$.

Der Funktionsablauf ist folgender:

Ausgehend von der Annahme, dass ein bewegliches Teil der Messeinrichtung L um eine bestimmte Strecke bewegt wird, liegen seitens des Abtastsignalverstärkers 1 Momentanwerte der analogen Signale $S_1$ und $S_2$ am Eingang des Komparators K an, die nicht mit den Momentanwerten der Referenzsignale $R_{S1}$ und $R_{S2}$ an den anderen Eingängen des Komparators K übereinstimmen. Der Vergleich zwischen $S_1$ und $R_{S1}$ bzw. $S_2$ und $R_{S2}$ ergibt also Differenzsignale $\Delta S_1$ bzw. $\Delta S_2$, die in den Bausteinen $Q_P$ und $Q_A$ so aufbereitet werden, dass im Regelverstärker $R_P$ ein Steuersignal $S_D$ für die Phase, und im Regelverstärker $R_A$ ein Steuersignal $S_D'$ für die Amplitude erzeugt wird, die der Differenz der Momentanwerte der Signale $S_1$, $R_{S1}$ bzw. $S_2$, $R_{S2}$ entsprechen.

Der als Spannung am Oszillator O anliegende Betrag des Steuersignals $S_D$ ruft im Oszillator O die Erzeugung von Impulsen hervor, und zwar in diesem Fall einer Anzahl von Impulsen, die dem Hundertfachen Bruchteil der Länge einer Signalperiode P entspricht, um den das bewegliche Teil der Messeinrichtung L bewegt wurde, da für eine vollständige Signalperiode einhundert Impulse erforderlich sind.

Diese Impulse werden nun nach Richtungsbestimmung zum einen dem inkrementalen Zähler mit numerischer Anzeige A zugeführt, der diese Anzahl Impulse anzeigt, zum zweiten werden die Impulse dem Zähler 5 zugeführt, der das Zählergebnis in Form einer binären Information in den Digital-/Analogwandler DAW einspeist, der seinerseits daraus Signale erzeugt, die nun als neue, den neuen Abtastsignalen $S_1$ bzw. $S_2$ angepasste Referenzsignale $R_{S1}$ bzw. $R_{S2}$ an den anderen Eingängen des Komparators K anliegen. Nach diesem Ablauf ist das Vergleichsergebnis zwischen $S_1$, $R_{S1}$ und $S_2$, $R_{S2}$ = 0, d.h. $\Delta S_1$, $\Delta S_2$ = 0. Somit entsteht kein Steuersignal $S_D$ mehr, und der Oszillator O erzeugt keine Impulse mehr. Dieser Ablauf erfolgt kontinuierlich, so dass das Anzeigeergebnis ständig der unmittelbaren Messbewegung entspricht.

Der Regelverstärker $R_A$ für die Amplitude liefert ein vergleichsabhängiges Steuersignal $S_D'$ für die Nachregelung der Amplitude. Dieses Steuersignal $S_D'$ wird ebenfalls in den Digital-/Analogwandler DAW eingespeist und veranlasst mit Hilfe einer Referenzspannung, dass die Momentanwerte der Amplituden der Referenzsignale $R_{S1}$ und $R_{S2}$ den Momentanwerten der Amplituden der Abtastsignale $S_1$ und $S_2$ angeglichen werden. Auch dafür wird eine Quadrantenbewertung, hier im Baustein $Q_A$ durchgeführt.

Das Signal $S_D'$ wird ausserdem einem Korrekturbaustein R zugeführt, der zusätzlich das Zählergebnis des Zählers 5 in Form binärer Informationen enthält.

Aus dem Verlauf des Signals $S_D'$ und den genannten Binärinformationen werden im Korrekturbaustein R Korrekturdaten $\Delta D$ ermittelt und in einem Datenspeicher M abgespeichert.

Diese Korrekturdaten $\Delta D$ können auf Befehl oder selbsttätig bei jedem Zyklus (von Periode zu Periode der Signale) dem Signalgenerator G zugeführt werden, der über entsprechende Stellglieder $\Delta S_0$, $\Delta S_{90}$, $\Delta\varphi$, $\Delta A$ verfügt, die die Referenzsignale $R_{S1}$ und $R_{S2}$ anhand der Korrekturdaten $\Delta D$ verbessern.

Um Schwankungen im Signalverlauf zu verhindern, die kurz auftretende starke Abweichungen der Signale voneinander hervorrufen könnten, ist vorgesehen, über mehrere Signalperioden Korrekturdaten $\Delta D'$ zu ermitteln, den sich ergebenden Mittelwert $\overline{\Delta D'}$ im Datenspeicher M' abzuspeichern und den Stellgliedern $\Delta S_0$, $\Delta S_{90}$, $\Delta\varphi$, $\underline{\Delta A}$ dann diesen Mittelwert der Korrekturdaten $\overline{\Delta D'}$ zuzuführen.

Wie bereits beschrieben, kann die Korrektur der Signale selbsttätig oder auf Befehl erfolgen. Das beinhaltet, dass die bei einer Vergleichsmessung ermittelten Korrekturdaten $\Delta D$ so lange in den Signalgenerator G eingespeist werden, bis auf Veranlassung der beschriebenen Warneinrichtungen W neue Korrekturwerte ΔD ermittelt und in den Signalgenerator G eingespeist werden.

**Patentansprüche**

1. Digitale elektrische Längen- oder Winkelmesseinrichtung mit einem analoge periodische Abtastsignale (S₁, S₂) liefernden Messwertgeber und einer Einrichtung zur Fehlerkorrektur, bei der die analogen periodischen Abtastsignale (S₁, S₂) mit von einem Signalgenerator (G) erzeugten analogen periodischen Referenzsignalen (R_{S1}, R_{S2}) in einem Komparator (K) hinsichtlich Phase und Amplitude verglichen werden, wobei der Komparator (K) mit einem Korrekturbaustein (R) verbunden ist, dadurch gekennzeichnet, dass zur Ermittlung von Korrekturdaten (ΔD) bezüglich Symmetrie, Amplitudenverhältnis, Phasenwinkel und Signalform gegenüber den Abtastsignalen (S₁, S₂) für die Referenzsignale (R_{S1}, R_{S2}) der Signalgenerator (G) mit dem Komparator (K) und dem Korrekturbaustein (R) verbunden ist und dass die Korrekturdaten (ΔD), gegebenenfalls über Datenspeicher (M), dem Signalgenerator (G) zuführbar sind, so dass die Referenzsignale (R_{S1}, R_{S2}) an die Abtastsignale (S₁, S₂) anpassbar sind.

2. Messeinrichtung nach Anspruch 1, dadurch gekennzeichnet, dass im Korrekturbaustein (R) für wenigstens eine Periode der analogen periodischen Referenzsignale (R_{S1}, R_{S2}) Korrekturdaten (ΔD) ermittelt werden, die über Datenspeicher (M) in den Signalgenerator (G) eingespeist werden.

3. Messeinrichtung nach Anspruch 1, dadurch gekennzeichnet, dass im Korrekturbaustein (R) über mehrere Perioden der analogen periodischen Referenzsignale (R_{S1}, R_{S2}) Korrekturdaten (ΔD′) ermittelt werden, deren Mittelwerte $\overline{(ΔD′)}$ über einen Datenspeicher (M′) in den Signalgenerator (G) eingespeist werden.

4. Messeinrichtung nach Anspruch 2, dadurch gekennzeichnet, dass die Ermittlung der Korrekturdaten (ΔD) und somit die Korrektur der Referenzsignale (R_{S1}, R_{S2}) schrittweise von Periode zu Periode erfolgt.

5. Messeinrichtung nach Anspruch 1, dadurch gekennzeichnet, dass die Korrektur der Referenzsignale (R_{S1}, R_{S2}) im Signalgenerator (G) durch Stellglieder (ΔS₀, ΔS₉₀, Δφ, ΔA) erfolgt.

6. Messeinrichtung nach Anspruch 1, dadurch gekennzeichnet, dass dem Korrekturbaustein (R) Warneinrichtungen (W) nachgeschaltet sind, die bei zu grossen Abweichungen wirksam werden.

7. Messeinrichtung nach Anspruch 6, dadurch gekennzeichnet, dass die Warneinrichtungen (W) bei zu grossen Signalabweichungen die Ermittlung neuer Korrekturdaten (ΔD) und deren Einspeisung in den Datenspeicher (M) veranlassen.

**Claims**

1. Digital electric length or angle measuring device, with a pick-up which delivers analogue periodic scan signals (S₁, S₂) and a device for error correction, in which the analogue periodic scan signals (S₁, S₂) are compared for phase and amplitude in a comparator (K) with analogue periodic reference signals (R_{S1}, R_{S2}) generated by a signal generator (G), the comparator (K) being connected to a correction module (R), characterised in that to determine correction data (ΔD) with respect to symmetry, ratio of amplitudes, phase angle and signal shaping compared with the scan signals (S₁, S₂) for the reference signals (R_{S1}, R_{S2}), the signal generator (G) is connected to the comparator (K) and the correction module (R), and the correction data (ΔD) can be fed to the signal generator (G), via memories (M) if occasion arises, so that the reference signals (R_{S1}, R_{S2}) can be adapted to the scan signals (S₁, S₂).

2. Measuring device according to claim 1, characterised in that in the correction module (R) for at least one period of the analogue periodic reference signals (R_{S1}, R_{S2}) there are obtained correction data (ΔD) which are fed via memories (M) to the signal generator (G).

3. Measuring device according to claim 1, characterised in that in the correction module (R) over several periods of the analogue periodic reference signals (R_{S1}, R_{S2}) are obtained correction data (ΔD′) whose mean values $\overline{(ΔD′)}$ are fed via a memory (M′) to the signal generator (G).

4. Measuring device according to claim 2, characterised in that determination of the correction data (ΔD) and hence correction of the reference signals (R_{S1}, R_{S2}) take place stepwise from one period to the next.

5. Measuring device according to claim 1, characterised in that correction of the reference signals (R_{S1}, R_{S2}) takes place in the signal generator (G) by correcting elements (ΔS₀, ΔS₉₀, Δφ, ΔA).

6. Measuring device according to claim 1, characterised in that connected to the output of the correction module (R) are warning devices (W) which become operative in case of excessive deviations.

7. Measuring device according to claim 6, characterised in that the warning devices (W), in case of excessive signal deviations, cause new correction data (ΔD) to be obtained and fed into the memory (M).

**Revendications**

1. Dispositif électrique de mesure numérique de longueurs ou d'angles, comprenant un transmetteur de valeurs mesurées fournissant des signaux d'exploration (S₁, S₂) périodiques analogiques et un dispositif pour la correction d'erreurs, les signaux d'exploration (S₁, S₂) périodiques analogiques étant comparés dans un comparateur (K), en phase et amplitude, à des signaux de référence (R_{S1}, R_{S2}) périodiques analogiques produits à l'aide d'un générateur de signaux (G), le comparateur (K) étant relié à un composant de correction (R), caractérisé par le fait qu'en vue de la production de données de correction (ΔD) en ce qui concerne la symétrie, le rapport d'amplitude, l'angle de phase et la forme de signaux, par rapport aux signaux d'exploration (S₁, S₂), pour les signaux de référence ($R_{S1}$, $R_{S2}$), le générateur de signaux (G) est relié au comparateur (K) et au composant de correction (R) et que les données de correction ($\Delta D$) peuvent être appliquées au générateur de signaux (G), le cas échéant par l'intermédiaire de mémoires de données (M), de manière que les signaux de référence ($R_{S1}$, $R_{S2}$) puissent être adaptés aux signaux d'exploration ($S_1$, $S_2$).

2. Dispositif de mesure suivant la revendication 1, caractérisé par le fait que dans le composant de correction (R) sont déterminées, au moins pour une période des signaux de référence ($R_{S1}$, $R_{S2}$) périodiques analogues, des données de correction ($\Delta D$) qui sont appliquées au générateur de signaux (G) par l'intermédiaire de mémoires de données (M).

3. Dispositif de mesure suivant la revendication 1, caractérisé par le fait que dans le composant de correction (R) sont déterminées, sur plusieurs périodes des signaux de référence ($R_{S1}$, $R_{S2}$) périodiques analogues, des données de correction ($\Delta D'$) dont les valeurs moyennes ($\overline{\Delta D'}$) sont appliquées par l'intermédiaire d'une mémoire de données (M') au générateur de signaux (G).

4. Dispositif de mesure suivant la revendication 2, caractérisé par le fait que la détermination des données de correction ($\Delta D$) et donc la correction des signaux de référence ($R_{S1}$, $R_{S2}$) a lieu pas à pas de période à période.

5. Dispositif de mesure suivant la revendication 1, caractérisé par le fait que la correction des signaux de référence ($R_{S1}$, $R_{S2}$) dans le générateur de signaux (G) a lieu par des organes de réglage ($\Delta S_0$, $\Delta S_{90}$, $\Delta \varphi$, $\Delta_A$).

6. Dispositif de mesure suivant la revendication 1, caractérisé par le fait que le composant de correction (R) est suivi de dispositifs avertisseurs (W) qui entrent en action en cas d'écarts trop importants.

7. Dispositif de mesure suivant la revendication 6, caractérisé par le fait que les dispositifs avertisseurs (W) provoquent, en cas d'écarts de signaux trop importants, la détermination de nouvelles données de correction ($\Delta D$) et l'envoi de ces données dans la mémoire de données (M).

FIG.1

FIG. 2